# EUROPEAN PATENT APPLICATION

(11) **EP 4 755 760 A1**
(43) Date of publication of application: **10.06.2026**
(21) Application number: 24848025.3
(22) Date of filing: 16.07.2024
(51) Int. Cl.: B62D 5/04, B62D 6/00, B62D 15/02, B62D 101/00, B62D 113/00, B62D 127/00, B62D 125/00, B62D 137/00

(54) **VEHICLE STEERING CONTROL METHOD AND APPARATUS, VEHICLE, AND STORAGE MEDIUM**

(30) Priority: 28.07.2023 CN 202310945969
(71) Applicant: ZHEJIANG ZEEKR INTELLIGENT TECHNOLOGY CO., LTD., Ningbo, Zhejiang 315899 (CN); VIRIDI E-MOBILITY TECHNOLOGY (NINGBO) CO., LTD., Ningbo, Zhejiang 315336 (CN); Zhejiang Geely Holding Group Co., Ltd., Hangzhou, Zhejiang 310051 (CN)
(72) Inventor: WU, Jingming, Hangzhou Bay New Zone Ningbo, Zhejiang 315336 (CN); SUN, Lihe, Hangzhou Bay New Zone Ningbo, Zhejiang 315336 (CN); WANG, Peng, Hangzhou Bay New Zone Ningbo, Zhejiang 315336 (CN); CHEN, Qimiao, Hangzhou Bay New Zone Ningbo, Zhejiang 315336 (CN); DENG, Xiang, Hangzhou Bay New Zone Ningbo, Zhejiang 315336 (CN); LIU, Chao, Hangzhou Bay New Zone Ningbo, Zhejiang 315336 (CN); HUANG, Peng, Hangzhou Bay New Zone Ningbo, Zhejiang 315336 (CN); ZHANG, Dang, Hangzhou Bay New Zone Ningbo, Zhejiang 315336 (CN); QIU, Jian, Hangzhou Bay New Zone Ningbo, Zhejiang 315336 (CN); FENG, Rui, Hangzhou Bay New Zone Ningbo, Zhejiang 315336 (CN); ZHANG, Guochao, Hangzhou Bay New Zone Ningbo, Zhejiang 315336 (CN)
(74) Representative: Boult Wade Tennant LLP
(86) International application number: PCT/CN2024/105791
(87) International publication number: WO 2025/026066

(57) **Abstract**

The present application provides a vehicle steering control method and apparatus, a vehicle and a storage medium. When an automatic U-turn mode is activated, a vehicle controller acquires an auxiliary parameter of a vehicle according to a pre-activation signal input by a user, generates a target direction, a rotation angle, a feed-forward torque and a target wheel speed, and then sends a steering instruction to a motor controller. The motor controller responds according to the feed-forward torque, obtains a response signal, and sends the response signal to the vehicle controller. The vehicle controller acquires swing angle sensor information and lateral longitudinal acceleration information according to the response signal, and then calculates a wheel rotation angle and sends it to the motor controller. The motor controller performs self-closed loop control according to the target direction, the target wheel speed, the wheel rotation angle, the rotation angle and the auxiliary parameters to control the vehicle to complete steering. The zero-turning-radius steering during automatic U-turns for the vehicle is achieved, so as to make the vehicle steering more flexible, precise and efficient, and reduce rotation errors, thereby achieving driving control at millisecond level.

## Description

The present application claims priorities to the Chinese Patent Application No. 202310945969.5, filed with the China National Intellectual Property Administration on July 28, 2023 and entitled "VEHICLE STEERING CONTROL METHOD AND APPARATUS, VEHICLE AND STORAGE MEDIUM", which is hereby incorporated by reference in its entirety.

### TECHNICAL FIELD

The present application relates to, but is not limited to, the field of vehicle control technologies, and in particular, to a vehicle steering control method and apparatus, a vehicle, and a storage medium.

### BACKGROUND

Vehicle steering performance is one of the main performances of a vehicle, and the performance of a steering system directly influences the operating stability of the vehicle, and plays a crucial role in ensuring the safe driving of the vehicle, reducing traffic accidents, protecting the personal safety of drivers, and improving working conditions of drivers. How to reasonably design the steering system to enable the vehicle to achieve excellent operating performance has always been an important hot issue nowadays.

Regarding the steering problem of the vehicle, the most primitive operation is to realize the vehicle steering through rotating a steering wheel by the driver. However, the most primitive steering system has a large steering radius during a process of controlling the steering of the vehicle. In order to adapt to narrow roads, a preset angle is set to the wheels for steering, thereby reducing the steering radius. However, this method cannot make flexible changes in complex road scenarios and the operation thereof is frequent, resulting in unstable vehicle speed control and poor user experience.

### SUMMARY

The following is a summary of the subject matter described in detail in this article. This summary is not intended to limit the protection scope of the claims.

The present application provides a vehicle steering control method and apparatus, a vehicle, and a storage medium.

In a first aspect, the present application provides a vehicle steering control method, which is applied to a motor controller, including:
receiving a steering instruction sent by a vehicle controller, where the steering instruction includes a target direction, a rotation angle, a feed-forward torque, a target wheel speed and an auxiliary parameter, and the auxiliary parameter is configured to assist the motor controller to respond to the steering instruction;
responding to the feed-forward torque according to the target direction, the target wheel speed and the auxiliary parameter to obtain a response signal;
sending the response signal to the vehicle controller;
receiving a wheel rotation angle sent by the vehicle controller, where the wheel rotation angle is calculated by the vehicle controller according to the response signal; and
performing self-closed loop control according to the target direction, the target wheel speed, the wheel rotation angle, the rotation angle and the auxiliary parameter to control the vehicle to complete steering.

With reference to the first aspect, in some embodiments, the performing the self-closed loop control according to the target direction, the target wheel speed, the wheel rotation angle, the rotation angle and the auxiliary parameter to control the vehicle to complete steering includes:
calculating a motor speed and a target rotation angle according to the target wheel speed, the wheel rotation angle and the rotation angle;
calculating a target torque according to the target direction, the motor speed, the target rotation angle and the auxiliary parameter; and
controlling the vehicle to complete steering according to the target torque, the motor speed and the target rotation angle.

With reference to the first aspect, in some embodiments, the method further includes:
acquiring self-fault information and sending the self-fault information to the vehicle controller, where the self-fault information includes overheating or overload;
receiving a termination instruction sent by the vehicle controller, where the termination instruction is configured to instruct the motor controller to terminate controlling the vehicle to perform a steering operation; and
controlling the vehicle to terminate steering according to the termination instruction.

In a second aspect, the present application provides a vehicle steering control method, which is applied to a vehicle controller, including:
acquiring a pre-activation signal input by a user when an automatic U-turn mode is activated, where the pre-activation signal includes a rotation direction signal, a rotation angle signal, a brake pedal signal, an accelerator pedal signal and a gear signal;
acquiring an auxiliary parameter of a vehicle according to the pre-activation signal, where the auxiliary parameter is configured to assist a motor controller to respond to a steering instruction;
obtaining a target direction, a rotation angle, a feed-forward torque, and a target wheel speed according to the rotation direction signal, the brake pedal signal, the accelerator pedal signal, and the gear signal, where the feed-forward torque is configured to instruct the motor controller to start controlling the vehicle to perform a steering operation; and
sending the steering instruction to the motor controller, where the steering instruction includes the target direction, the rotation angle, the feed-forward torque, the target wheel speed, and the auxiliary parameter.

With reference to the second aspect, in some embodiments, the method further includes:
receiving a response signal sent by the motor controller;
acquiring swing angle sensor information and lateral longitudinal acceleration information according to the response signal;
calculating a wheel rotation angle according to the swing angle sensor information and the lateral longitudinal acceleration information; and
sending the wheel rotation angle to the motor controller.

With reference to the second aspect, in some embodiments, the method further includes:
receiving self-fault information sent by the motor controller, where the self-fault information includes overheating or overload; and
generating a termination instruction according to the self-fault information, and sending the self-fault information to the motor controller, where the termination instruction is configured to instruct the motor controller to terminate controlling the vehicle to perform the steering operation.

With reference to the second aspect, in some embodiments, before the acquiring the pre-activation signal sent by the user, the method further includes:
receiving an automatic U-turn turn-on signal input by the user; and
activating an automatic U-turn mode according to the automatic U-turn turn-on signal.

In a third aspect, the present application provides a vehicle steering control apparatus, including:
a first receiving module, configured to receive a steering instruction sent by a vehicle controller, where the steering instruction includes a target direction, a rotation angle, a feed-forward torque, a target wheel speed and an auxiliary parameter, and the auxiliary parameter is configured to assist a motor controller to respond to the steering instruction;
a responding module, configured to respond to the feed-forward torque according to the target direction, the target wheel speed and the auxiliary parameter to obtain a response signal;
a sending module, configured to send the response signal to the vehicle controller;
a second receiving module, configured to receive a wheel rotation angle sent by the vehicle controller, where the wheel rotation angle is calculated by the vehicle controller according to the response signal; and
a first controlling module, configured to perform self-closed loop control to control the vehicle to complete steering according to the target direction, the target wheel speed, the wheel rotation angle, the rotation angle and the auxiliary parameter.

With reference to the third aspect, in some embodiments, the first controlling module includes:
a first calculation unit, configured to calculate a motor speed and a target rotation angle according to the target wheel speed, the wheel rotation angle and the rotation angle;
a second calculation unit, configured to calculate a target torque according to the target direction, the motor speed, the target rotation angle and the auxiliary parameter; and
a control unit, configured to control the vehicle to complete steering according to the target torque, the motor speed, and the target rotation angle.

With reference to the third aspect, in some embodiments, the apparatus further includes:
an acquiring module, configured to acquire self-fault information and send the self-fault information the vehicle controller, where the self-fault information includes overheating or overload;
a third receiving module, configured to receive a termination instruction sent by the vehicle controller, where the termination instruction is configured to instruct the motor controller to terminate controlling the vehicle to perform a steering operation; and
a second controlling module, configured to control the vehicle to terminate steering according to the termination instruction.

In a fourth aspect, the present application provides a vehicle steering control apparatus, including:
a first acquiring module, configured to acquire a pre-activation signal input by a user when an automatic U-turn mode is activated, where the pre-activation signal includes a rotation direction signal, a rotation angle signal, a brake pedal signal, an accelerator pedal signal and a gear signal;
a second acquiring module, configured to acquire an auxiliary parameter of a vehicle according to the pre-activation signal, where the auxiliary parameter is configured to assist a motor controller to respond to a steering instruction;
a generating module, configured to obtain a target direction, a rotation angle, a feed-forward torque and a target wheel speed according to the rotating direction signal, the brake pedal signal, the accelerator pedal signal and the gear signal, where the feed-forward torque is configured to instruct the motor controller to start controlling the vehicle to perform a steering operation; and
a first sending module, configured to send the steering instruction to the motor controller, where the steering instruction includes the target direction, the rotation angle, the feed-forward torque, the target wheel speed, and the auxiliary parameter.

With reference to the fourth aspect, in some embodiments, the apparatus further includes:
a first receiving module, configured to receive a response signal sent by the motor controller;
a third acquiring module, configured to acquire swing angle sensor information and lateral longitudinal acceleration information according to the response signal;
a calculation module, configured to calculate a wheel rotation angle according to the swing angle sensor information and the lateral longitudinal acceleration information; and
a second sending module, configured to send the wheel rotation angle to the motor controller.

With reference to the fourth aspect, in some embodiments, the apparatus further includes:
a second receiving module, configured to receive an automatic U-turn turn-on signal input by the user;
a mode activation module, configured to activate the automatic U-turn mode according to the automatic U-turn turn-on signal.

In a fifth aspect, the present application provides a vehicle, including: a vehicle main body, a storage unit provided in the vehicle main body, an electronic control unit, and a display screen; where
the storage unit is configured to store computer execution instructions; and
the electronic control unit is configured to execute the computer execution instructions stored in the storage unit, to implement the method according to any one of the above aspects.

In a sixth aspect, the present application provides a computer-readable storage medium, where the computer-readable storage medium stores computer execution instructions which, when being executed by a processor, is configured to implement the vehicle steering control method according to any one of the above aspects.

In a seventh aspect, the present application provides a computer program product, where the computer program product includes a computer program which, when being executed by a processor, is configured to implement the method according to any one of the above aspects.

According to the vehicle steering control method and apparatus, the vehicle and the storage medium provided in the present application, when the automatic U-turn mode is activated, the vehicle controller acquires the pre-activation signal input by the user, acquires the auxiliary parameter of the vehicle according to the pre-activation signal, then acquires the target direction, the rotation angle, the feed-forward torque and the target wheel speed according to the rotation direction signal, the brake pedal signal, the accelerator pedal signal and the gear signal, and sends the steering instruction to the motor controller. The motor controller responds to the feed-forward torque according to the target direction, the target wheel speed and the auxiliary parameter to obtain the response signal, and sends the response signal to the vehicle controller. The vehicle controller acquires the swing angle sensor information and the lateral longitudinal acceleration information according to the response signal, then calculates the wheel rotation angle and sends the wheel rotation angle to the motor controller. The motor controller performs the self-closed loop control according to the target direction, the target wheel speed, the wheel rotation angle, the rotation angle and the auxiliary parameter, so as to control the vehicle to complete steering. By means of the above-mentioned method, zero-turning-radius steering during automatic U-turns for the vehicle is achieved, so as to make the vehicle steering more flexible, precise and efficient, and reduce rotation errors, thereby achieving driving control at millisecond level.

Other aspects will become apparent after reading and understanding the accompanying drawings and detailed description.

### BRIEF DESCRIPTION OF THE DRAWINGS

The accompanying drawings, which are incorporated into the specification and form part of the specification, illustrate the embodiments in accordance with the present application and are configured together with the specification to explain the principles of the present application.
FIG. 1 is an application scenario diagram of a vehicle steering control method according to an embodiment of the present application.
FIG. 2 is a schematic flowchart of a first embodiment of the vehicle steering control method according to an embodiment of the present application.
FIG. 3 is a schematic architectural diagram of the vehicle steering control method according to an embodiment of the present application.
FIG. 4 is a schematic principle flowchart of the vehicle steering control method according to an embodiment of the present application.
FIG. 5 is a schematic flowchart of a second embodiment of the vehicle steering control method according to an embodiment of the present application.
FIG. 6 is a schematic flowchart of a third embodiment of the vehicle steering control method according to an embodiment of the present application.
FIG. 7 is a schematic flowchart of a fourth embodiment of the vehicle steering control method according to an embodiment of the present application.
FIG. 8 is a schematic structural diagram of a first embodiment of a vehicle steering control apparatus according to an embodiment of the present application.
FIG. 9 is a schematic structural diagram of a second embodiment of the vehicle steering control apparatus according to an embodiment of the present application.
FIG. 10 is a schematic structural diagram of a third embodiment of the vehicle steering control apparatus according to an embodiment of the present application.
FIG. 11 is a schematic structural diagram of a fourth embodiment of the vehicle steering control apparatus according to an embodiment of the present application.
FIG. 12 is a schematic structural diagram of a fifth embodiment of the vehicle steering control apparatus according to an embodiment of the present application.
FIG. 13 is a schematic structural diagram of a vehicle according to an embodiment of the present application.

Through the above accompanying drawings, the specific embodiments of the present application have been shown, and more detailed descriptions will be provided in the following text. The accompanying drawings and the text description are not intended to limit the scope of the present application in any way, but rather to illustrate the concept of the present application for those skilled in the art by referring to the specific embodiments.

### DESCRIPTION OF EMBODIMENTS

The exemplary embodiments will be described in detail herein, with examples shown in the accompanying drawings. When referring to the accompanying drawings, unless otherwise indicated, the same numbers in different drawings represent the same or similar elements. The embodiments described in the following exemplary embodiments do not represent all embodiments consistent with the present application. Rather, they are merely examples of apparatuses and methods consistent with some aspects of the present application as detailed in the appended claims.

Vehicle steering performance is one of the main performances of a vehicle, and the performance of a steering system directly influences the operating stability of the vehicle, and plays an important role in ensuring safe driving of the vehicle, reducing traffic accidents, protecting the personal safety of drivers, and improving working conditions of drivers. How to reasonably design the steering system to enable the vehicle to achieve excellent operating performance has always been an important hot issue nowadays. Regarding the steering problem of the vehicle, the most primitive operation is to realize the vehicle steering through rotating a steering wheel by the driver. However, the most primitive steering system has a large steering radius during a process of controlling the steering of the vehicle. In order to adapt to narrow roads, a preset angle is set to the wheels for steering, thereby reducing the steering radius. However, this method cannot make flexible changes in complex road scenarios and the operation thereof is frequent, resulting in unstable vehicle speed control and poor user experience.

The present application provides a vehicle steering control method and apparatus, a vehicle, and a storage medium, thereby achieving more flexible, precise, and efficient zero-turning-radius steering for the vehicle. Specifically, for vehicle steering, the driver usually operates the steering wheel to control the rotation of wheels to achieve vehicle steering. However, the most primitive steering system has a larger steering radius during the process of controlling the steering of the vehicle. In order to adapt the narrow roads, a preset angle is set to the wheels for steering, thereby reducing the steering radius. However, this method cannot make flexible changes in complex road scenarios and the operation thereof is frequent, resulting in unstable vehicle speed control and poor user experience. In consideration of these problems, the inventor investigates whether it is possible to collect vehicle data in real time through remote intelligent operation of the vehicle control by the user, transmit the data to the motor controller, and realize the closed-loop control by the motor controller according to user requirements, thereby realizing zero-turning-radius steering for the vehicle. On this basis, the technical solution of the present application is proposed.

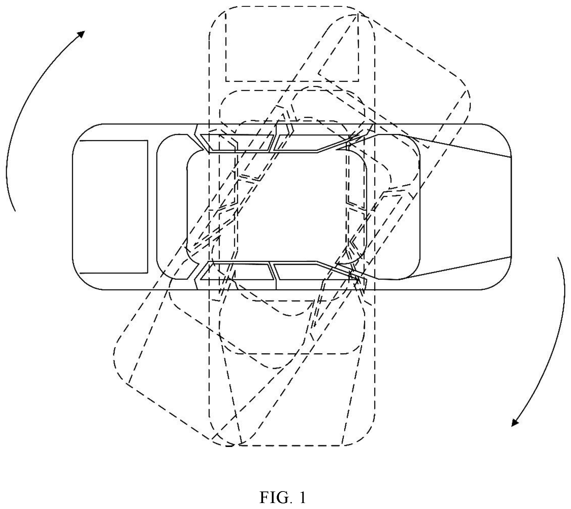

FIG. 1 is a diagram of an application scenario of a vehicle steering control method according to an embodiment of the present application. As shown in FIG. 1, the scenario at least includes a vehicle to be steered, and the vehicle is provided with a vehicle controller and a motor controller, where the vehicle control can realize real-time collection and processing of vehicle data, and the motor controller can realize the control of a motor of the vehicle, thereby realizing zero-turning-radius steering for the vehicle, and the vehicle controller and the motor controller can perform data communication through a CAN bus.

The present application does not impose specific limitations on the type and form of the vehicle, as well as the types and forms of the configured vehicle controller and motor controller.

The technical solution of the present application and how the technical solution of the present application solves the above technical problems will be described in detail below with reference to specific embodiments. The following several specific embodiments may be combined with each other, and the same or similar concepts or procedures may not be repeated in certain embodiments. The embodiments of the present application will be described below with reference to the accompanying drawings.

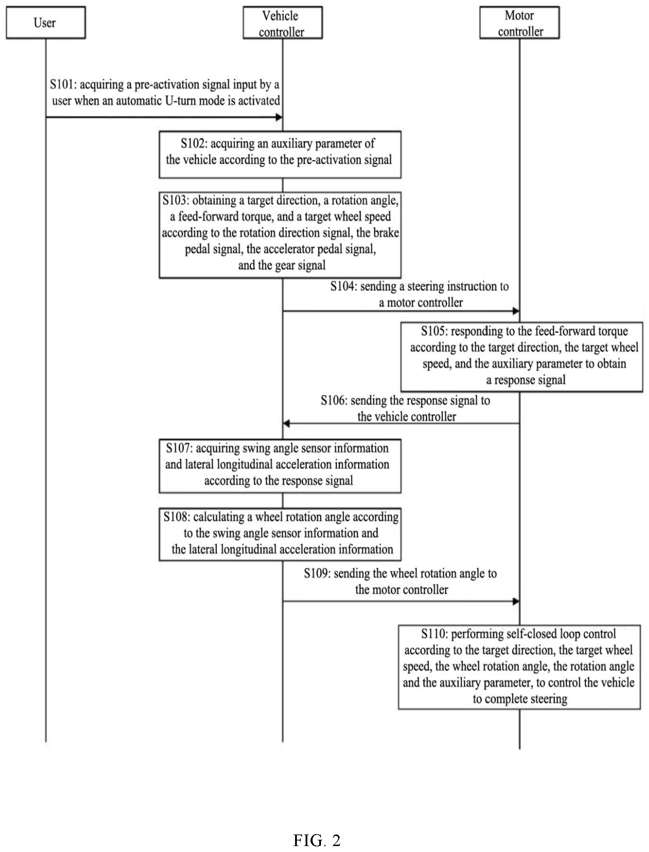

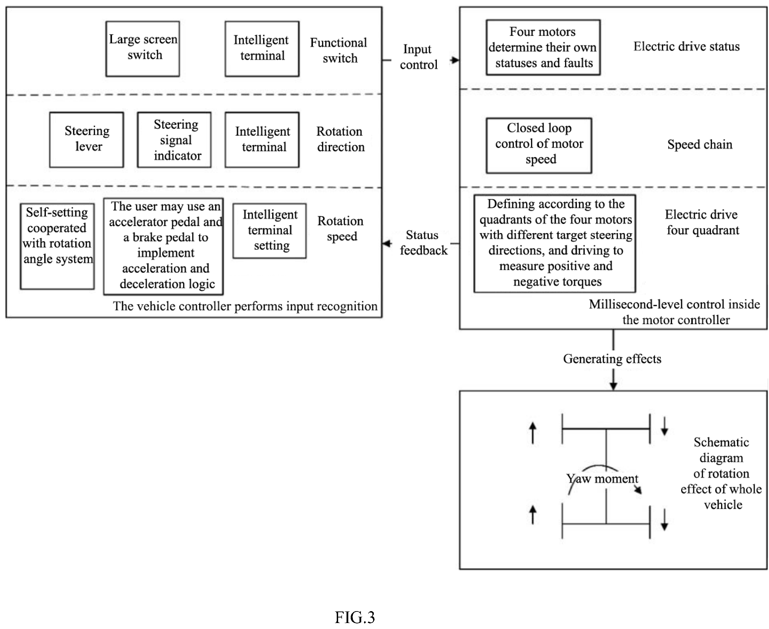

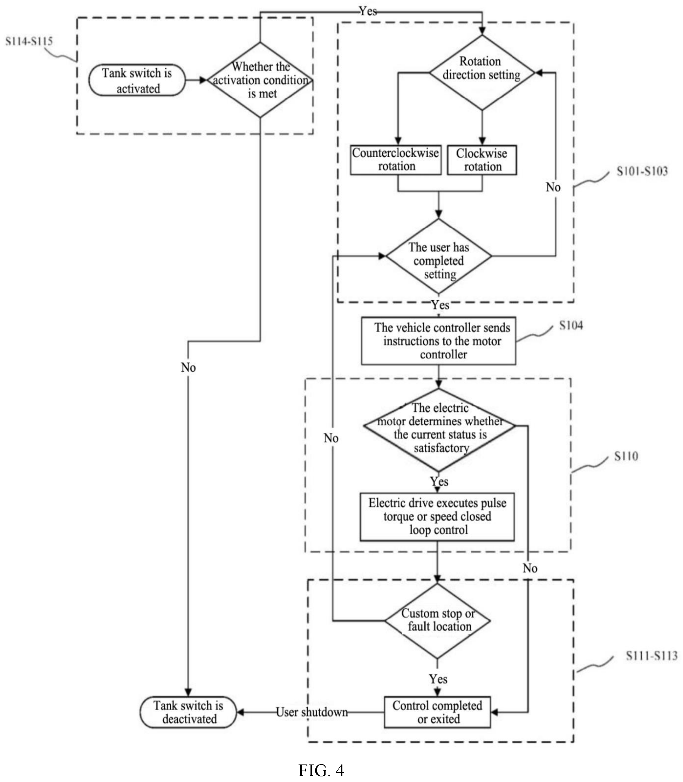

FIG. 2 is a flow diagram of a first embodiment of the vehicle steering control method according to an embodiment of the present application, FIG. 3 is a schematic architectural diagram of the vehicle steering control method according to an embodiment of the present application, and FIG. 4 is a schematic principle flowchart of the vehicle steering control method according to an embodiment of the present application. In conjunction with FIGS. 2, 3 and 4, the steering control method provided in the present application is analyzed, and the method specifically includes the following steps.

S101: acquiring a pre-activation signal input by a user when an automatic U-turn mode is activated.

In this step, in order to enable the vehicle to achieve automatic U-turn steering, when the automatic U-turn mode is activated, the vehicle controller acquires the pre-activation signal from the user, where the pre-activation signal includes a rotation direction signal, a rotation angle signal, a brake pedal signal, an accelerator pedal signal and a gear signal.

Specifically, the vehicle controller may prompt the user to input the pre-activation signal through a vehicle display screen, and the user may set a rotation direction by toggling a lever provided at the driver's seat, to generate the rotation direction signal, where the rotation direction is clockwise or anticlockwise. Furthermore, the user sets a steering rotation angle through the display screen according to actual scenario requirements, so as to generate the rotation angle signal. The user generates the brake pedal signal by releasing the brake pedal. The user generates the accelerator pedal signal by releasing or pressing the accelerator pedal. The user generates the gear signal by adjusting the gear to a forward gear or a reverse gear. All above-mentioned operations that are performed through the display screen can also be executed through an intelligent terminal by the user, and the specific operation method is not specifically limited in the present application.

S102: acquiring an auxiliary parameter of the vehicle according to the pre-activation signal.

In this step, after receiving the activation signal input by the user, the vehicle controller needs to prepare data for automatic U-turn of the vehicle. In order to adapt to different scenarios and have higher flexibility during the vehicle U-turn process, the auxiliary parameter of the vehicle is acquired according to the pre-activation signal. The auxiliary parameter includes an IMU sensor status, a hydraulic braking force, a wheel end torque limit value, a tank U-turn enabling status, a wheel control mode, a road surface status, a driving mode, etc. The above-mentioned auxiliary parameters are all acquired by the vehicle controller from a sensor or a hardware device configured on the vehicle, and the specific parameters in the auxiliary parameters can be freely matched and set according to user requirements and scenario requirements.

S103: obtaining a target direction, a rotation angle, a feed-forward torque, and a target wheel speed according to the rotation direction signal, the brake pedal signal, the accelerator pedal signal, and the gear signal.

In this step, after receiving the pre-activation signal input by the user, the vehicle controller generates corresponding information according to the pre-activation signal in response to user requirements, which is used to achieve the automatic U-turn of the vehicle. According to the rotation direction signal, the brake pedal signal, the accelerator pedal signal and the gear signal which are input by the user, the target direction, the rotation angle, the feed-forward torque and the target wheel speed which can achieve the automatic U-turn of the vehicle are generated.

In a specific embodiment, after receiving the rotation direction signal input by the user, if the rotation direction signal indicates a counterclockwise rotation direction, a direction of a yaw force required by the whole vehicle is counterclockwise, that is, at this time, the system end calculates that driving torques of two motors on a left side of four motors are negative torques and operate in a third quadrant, while driving torques of the two motors on a right side are positive torques and operate in a first quadrant, so as to obtain the target direction and the feed-forward torque.

According to an opening degree of the accelerator pedal as an X coordinate axis, and wheel speed/rotation speed/torque/yaw rate/wheel side load can be taken as five control targets respectively as a Y coordinate axis, a two-dimensional table of the five control targets is created. The five control targets are placed into initial values through simulation, and an occupation ratio of each element is ultimately determined through real-vehicle calibration to achieve better control, thereby obtaining the target wheel speed. Regardless of the control speed, deceleration and pause can be achieved through the brake pedal.

S104: sending a steering instruction to a motor controller.

In this step, after generating the steering instruction, the vehicle controller sends the steering instruction to the motor controller, where the steering instruction includes the target direction, the rotation angle, the feed-forward torque, the target wheel speed and the auxiliary parameter.

S105: responding to the feed-forward torque according to the target direction, the target wheel speed, and the auxiliary parameter to obtain a response signal.

In this step, after receiving the steering instruction sent by the vehicle controller, the motor controller detects, according to the steering instruction, whether its own conditions can meet the realization of the target direction and the target wheel speed in the steering instruction, and if so, it enters an activation status. It controls, according to the target direction and target wheel speed, the wheels to steer according to the feed-forward torque, to obtain the response signal.

S106: sending the response signal to the vehicle controller.

In this step, the motor controller responds to the feed-forward torque according to the target direction, the target wheel speed and the auxiliary parameter in the steering instruction, and sends the response signal to the vehicle controller after obtaining the response signal.

S107: acquiring swing angle sensor information and lateral longitudinal acceleration information according to the response signal.

In this step, the vehicle controller is equivalent to an on-board computer of the vehicle, which can realize data acquisition and calculation processing. After receiving the response signal sent by the motor controller, in order to improve flexibility, achieve the rotation angle required by the user, and reduce rotation deviations in actual scenarios, the swing angle sensor information and the lateral longitudinal acceleration information are acquired according to the response signal, where the swing angle sensor information and the lateral longitudinal acceleration information are both acquired from relevant sensors configured by the CAN bus to the vehicle itself.

S108: calculating a wheel rotation angle according to the swing angle sensor information and the lateral longitudinal acceleration information.

In this step, after acquiring the swing angle sensor information and the lateral longitudinal acceleration information, the wheel rotation angle is calculated according to the swing angle sensor information and the lateral longitudinal acceleration information.

S109: sending the wheel rotation angle to the motor controller.

In this step, after the vehicle controller calculates the wheel rotation angle, in order to enable the motor controller to experience significant rotation deviations during the process of controlling the steering of the vehicle, the wheel rotation angle is sent to the motor controller through the CAN bus.

S110: performing self-closed loop control according to the target direction, the target wheel speed, the wheel rotation angle, the rotation angle and the auxiliary parameter, so as to control the vehicle to complete steering.

In this step, after receiving the wheel rotation angle sent by the vehicle controller, the motor controller performs the self-closed loop control according to the target direction, the target wheel speed, the wheel rotation angle, the rotation angle and the auxiliary parameter in order to adapt to actual scenarios and provide flexibility.

Specifically, the motor speed and the target rotation angle are calculated according to the target wheel speed, the wheel rotation angle and the rotation angle, then the target torque is calculated according to the target direction, the motor speed, the target rotation angle and the auxiliary parameter, and finally, the vehicle is controlled to complete steering according to the target torque, the motor speed and the target rotation angle.

According to the vehicle steering control method provided in this embodiment, when the automatic U-turn mode is activated, the vehicle controller acquires the pre-activation signal input by the user, acquires the auxiliary parameter of the vehicle according to the pre-activation signal, then acquires the target direction, the rotation angle, the feed-forward torque and the target wheel speed according to the rotation direction signal, the brake pedal signal, the accelerator pedal signal and the gear signal, and sends the steering instruction to the motor controller. The motor controller responds to the feed-forward torque according to the target direction, the target wheel speed and the auxiliary parameter to obtain the response signal, and sends the response signal to the vehicle controller. The vehicle controller acquires the swing angle sensor information and the lateral longitudinal acceleration information according to the response signal, then calculates the wheel rotation angle, and sends the wheel rotation angle to the motor controller. The motor controller performs the self-closed loop control according to the target direction, the target wheel speed, the wheel rotation angle, the rotation angle and the auxiliary parameter, so as to control the vehicle to complete steering. By means of the above-mentioned method, zero-turning-radius steering during automatic U-turns for the vehicle is achieved, so as to make the vehicle steering more flexible, precise and efficient, and reduce rotation errors, thereby achieving driving control at millisecond level.

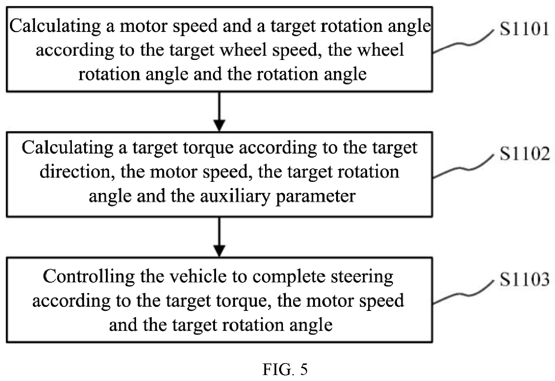

FIG. 5 is a schematic flowchart of a second embodiment of the vehicle steering control method according to an embodiment of the present application. As shown in FIG. 5, based on the above-mentioned embodiment and in combination with FIG. 4, the step S110 includes the following steps.

S1101: calculating a motor speed and a target rotation angle according to the target wheel speed, the wheel rotation angle and the rotation angle.

In this step, after receiving the steering instruction sent by the vehicle controller, the motor controller starts to control the vehicle to perform a steering operation according to the steering instruction. However, in order to adapt to actual scenarios, the motor controller can calculate the target rotation angle according to the rotation angle and the wheel rotation angle set by the user, where the target rotation angle represents the remaining angle that needs to be rotated to meet user requirements. Then the target wheel speed is converted into a motor speed control signal, the motor speed is obtained through a rotary transformation sensor according to the motor speed control signal. It should be noted that the motor speed can be adjusted in real-time according to the actual scenarios, auxiliary parameters, and user requirements.

S1102: calculating a target torque according to the target direction, the motor speed, the target rotation angle and the auxiliary parameter.

In this step, the feed-forward torque sent by the vehicle controller to the motor controller in the early stage is to instruct the motor controller to start controlling the vehicle to perform the steering operation. In order to adapt to actual scenarios and user requirements, the target torque is calculated according to the target direction, the motor speed, the target rotation angle and the road surface status in the auxiliary parameter, where different road surface statuses result in different frictional forces on the wheels, so that in order to reduce rotation deviations and improve rotation accuracy, independent torque analysis can be performed on different motors, so that the calculated target torque is different torque data of a plurality of motors.

S1103: controlling the vehicle to complete steering according to the target torque, the motor speed and the target rotation angle.

In this step, after calculating the target torque, the motor speed and the target rotation angle according to the above-mentioned data, the motor controller controls a wheel motor to convert the target torque into an electric current, which is then converted into kinetic energy, and an actual torque is achieved according to the motor speed and the target rotation angle.

It should be noted that the motor controller may receive the instruction sent by the vehicle controller in real time, and may also calculate the target torque, the motor speed, and the target rotation angle in real time based on the instruction, so as to control the vehicle to complete the steering operation. By means of the method, precise control is realized, thereby making the control reach millisecond level, improving the control accuracy, and improving the rotation accuracy for in-situ rotation, so that the offset of the whole vehicle is controlled at centimeter level.

In the vehicle steering control method provided in this embodiment, the motor speed and the target rotation angle are calculated according to the target wheel speed, the wheel rotation angle and the rotation angle, then the target torque is calculated according to the target direction, the motor speed, the target rotation angle and the auxiliary parameters, and finally the vehicle is controlled to complete steering according to the target torque, the motor speed and the target rotation angle. By means of the above-mentioned method, precise control has been realized, thereby making the control reach millisecond level, improving the control accuracy, and improving the rotation accuracy for in-situ rotation, so that the offset of the whole vehicle is controlled at the centimeter level, and the flexibility of the vehicle's automatic steering function can be improved.

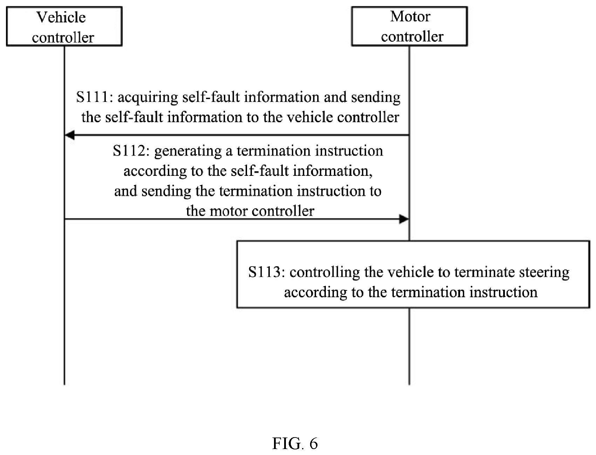

FIG. 6 is a schematic flowchart of a third embodiment of the vehicle steering control method according to an embodiment of the present application. As shown in FIG. 6, based on the above-mentioned embodiments and in combination with FIG. 4, the vehicle steering control method provided in the present application further includes the following steps.

S111: acquiring self-fault information and sending the self-fault information to the vehicle controller.

In this step, in order to improve the flexibility of the automatic U-turn, the motor controller acquires the self-fault information in real time, and sends it to the vehicle controller, where the self-fault information includes overheating or overload.

S112: generating a termination instruction according to the self-fault information, and sending the termination instruction to the motor controller.

In this step, after the vehicle controller receives the self-fault information sent by the motor controller through the above-mentioned steps, if the motor controller fails, it indicates that the motor controller cannot normally control the vehicle to complete the steering operation. In order to avoid hardware loss of the vehicle, the termination instruction is generated according to the self-fault information, and is sent to the motor controller, wherein the termination instruction is configured to instruct the motor controller to terminate controlling the vehicle to perform the steering operation.

S113: controlling the vehicle to terminate steering according to the termination instruction.

In this step, after receiving the termination instruction sent by the vehicle controller, the motor controller controls the vehicle to terminate steering according to the termination instruction in order to avoid the loss to its own device.

Optionally, in order to achieve controllability during an automatic U-turn process of the vehicle, the steering can be terminated according to the instruction of the user. Specifically, after receiving a signal that the user steps on the brake pedal, the vehicle controller sends a pause instruction to the motor controller. At this time, the motor controller will pause the vehicle steering according to the pause instruction, and after the user releases the brake pedal, the vehicle steering operation can be continued. The user may also send a pause or termination instruction to the vehicle controller through the vehicle display screen or the intelligent terminal, so as to achieve the pause or termination of the vehicle steering.

According to the vehicle steering control method provided in this embodiment, the motor controller acquires the self-fault information and sends it to the vehicle controller. The vehicle controller generates the termination instruction according to the self-fault information and sends it to the motor controller. The motor controller controls the vehicle to terminate steering according to the termination instruction. By monitoring the self-information of the motor controller in real time, zero-turning-radius during automatic U-turn for the vehicle can be more flexible, thereby ensuring the controllability.

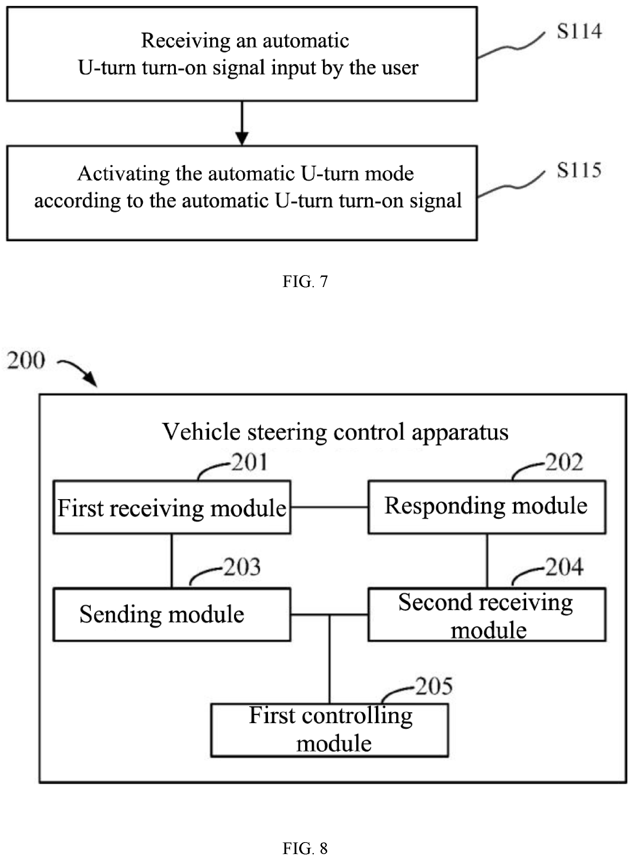

FIG. 7 is a schematic flowchart of a fourth embodiment of the vehicle steering control method according to an embodiment of the present application. As shown in FIG. 7, based on the above-mentioned embodiments and in combination with FIG. 4, the vehicle steering control method provided in the present application further includes the following steps.

S114: receiving an automatic U-turn turn-on signal input by the user.

In this step, in order to enable the user to remotely intelligently control the vehicle to perform the steering operation, the user sends the automatic U-turn turn-on signal to the vehicle controller, and the vehicle controller receives the automatic U-turn turn-on signal input by the user.

Specifically, the user may input the automatic U-turn turn-on signal through the display screen inside the vehicle, for example, by touching the screen and clicking the automatic U-turn turn-on button, the automatic U-turn turn-on signal will be generated. The user can also remotely control the vehicle through an intelligent terminal to generate the automatic U-turn turn-on signal, where the intelligent terminal is any electronic device that can remotely communicate with the vehicle, such as a smartphone, a notebook computer, etc., and the present application does not make specific limitations on the type of intelligent terminal. The automatic U-turn turn-on signal may be transmitted to the vehicle controller through the CAN bus or the cloud.

S115: activating the automatic U-turn mode according to the automatic U-turn turn-on signal.

In this step, after receiving the automatic U-turn turn-on signal sent by the user, the vehicle controller starts the automatic U-turn mode according to the automatic U-turn turn-on signal, and activates the vehicle to perform the automatic U-turn function.

According to the vehicle steering control method provided in this embodiment, the automatic U-turn turn-on signal input by the user is received and the automatic U-turn mode is activated according to the automatic U-turn turn-on signal, thereby eliminating the traditional method to achieve the steering operation by the driver operating the steering wheel and making the vehicle function more intelligent.

In a specific implementation, the vehicle steering control method provided by the embodiments of the present application can also implement obstacle avoidance processing for obstacles in actual scenarios, specifically:
the user can activate an auxiliary obstacle avoidance function through the vehicle display screen or the intelligent terminal. After this function is activated, the vehicle controller acquires real-time image information collected by radars and cameras configured in the vehicle. During the vehicle steering process, the vehicle controller can automatically determine obstacle situation around the vehicle, and when any radar captures the obstacle information or the obstacle information of the camera, the distance and size of the obstacle is determined, which is divided into Level 1, Level 2, and Level 3, specifically represented as:
Level 1: when a distance between the obstacle and the vehicle is less than 0.3 m, it is determined that the obstacle is an obstacle at a short distance, and the system will automatically and quickly stop, while providing system prompts to avoid damage;
Level 2: when the distance between the obstacle and the vehicle is between 0.3 m and 0.75 m, it is determined that the obstacle is an obstacle at a middle distance, and the system will automatically and slowly stop, while providing system prompts to avoid damage; and
Level 3: when the distance between the obstacle and the vehicle is between 0.75 m and 1.5 m, it is determined that an obstacle at a long distance, the system will automatically degrade to use the slowest speed to rotate, while no longer responding to the acceleration request of the accelerator pedal and providing system prompts.

When the obstacle is more than 1.5 meters away from the vehicle, it is not considered an obstacle.

Optionally, during the assisted obstacle avoidance process, the display screen of the vehicle or the intelligent terminal of the user can display obstacle image information in real time. If it is determined that the level is the Level 1 and the Level 2, there will also be voice prompts, and the user can clearly recognize the image information around the vehicle body through the display screen, and comprehensively determine the obstacle situation around the vehicle body combined with the obstacle prompt information from the radars.

If the user turns off the auxiliary obstacle avoidance level determination function, they can still use the image display function for subjective obstacle determination, leaving users with various options and handing over the control to the user.

FIG. 8 is a schematic structural diagram of a first embodiment of a vehicle steering control apparatus according to an embodiment of the present application. As shown in FIG. 8, the vehicle steering control apparatus 200 includes:
a first receiving module 201, configured to receive a steering instruction sent by a vehicle controller, where the steering instruction includes a target direction, a rotation angle, a feed-forward torque, a target wheel speed and an auxiliary parameter, and the auxiliary parameter is configured to assist a motor controller to respond to the steering instruction;
a responding module 202, configured to respond to the feed-forward torque according to the target direction, the target wheel speed, and the auxiliary parameter to obtain a response signal;
a sending module 203, configured to send the response signal to the vehicle controller;
a second receiving module 204, configured to receive a wheel rotation angle sent by the vehicle controller, where the rotation angle is calculated by the vehicle controller according to the response signal;
a first controlling module 205, configured to perform self-closed loop control to control the vehicle to complete steering according to the target direction, the target wheel speed, the wheel rotation angle, the rotation angle and the auxiliary parameter.

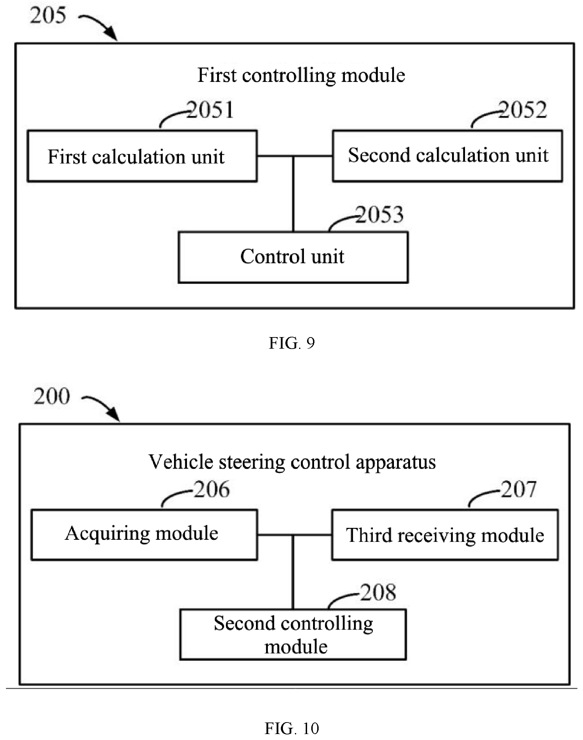

FIG. 9 is a schematic structural diagram of a second embodiment of the vehicle steering control apparatus according to an embodiment of the present application. As shown in FIG. 9, the first controlling module 205 includes:
a first calculation unit 2051, configured to calculate a motor speed and a target rotation angle according to the target wheel speed, the wheel rotation angle and the rotation angle;
a second calculation unit 2052, configured to calculate a target torque according to the target direction, the motor speed, the target rotation angle and the auxiliary parameter; and
a control unit 2053, configured to control the vehicle to complete steering according to the target torque, the motor speed and the target rotation angle.

FIG. 10 is a schematic structural diagram of a third embodiment of the vehicle steering control apparatus according to an embodiment of the present application. As shown in FIG. 10, the vehicle steering control apparatus 200 further includes:
an acquiring module 206, configured to acquire self-fault information and send the self-fault information the vehicle controller, the self-fault information includes overheating or overload;
a third receiving module 207, configured to receive a termination instruction sent by the vehicle controller, where the termination instruction is configured to instruct the motor controller to terminate controlling the vehicle to perform a steering operation; and
a second controlling module 208, configured to control the vehicle to terminate steering according to the termination instruction.

The vehicle steering control apparatus provided in each of the above-mentioned embodiments is configured to execute the method on the motor controller side in any one of the above-mentioned method embodiments, and the implementation principles and technical effects thereof are similar, which will not be repeated herein.

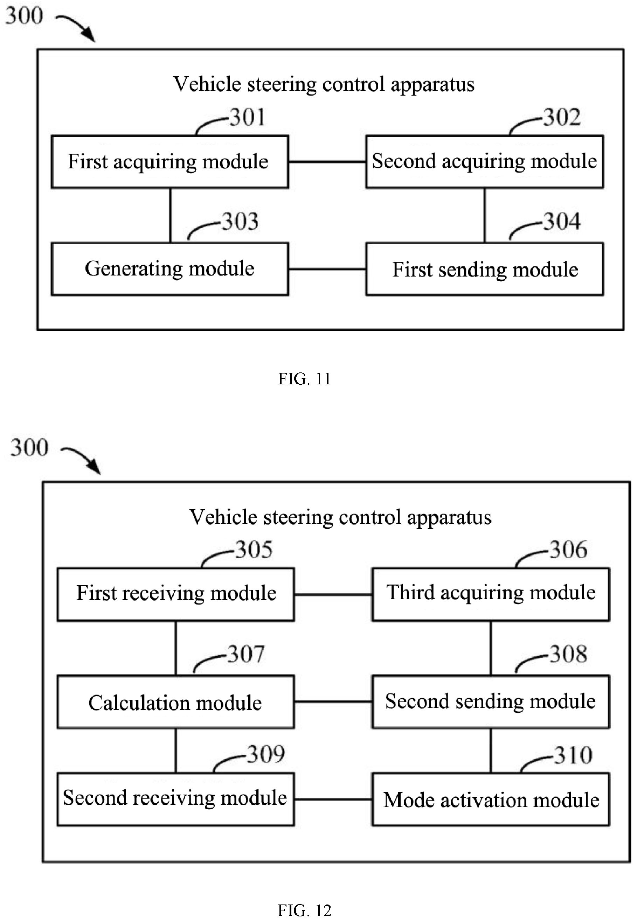

FIG. 11 is a schematic structural diagram of a fourth embodiment of the vehicle steering control apparatus according to an embodiment of the present application. As shown in FIG. 11, the vehicle steering control apparatus 300 includes:
a first acquiring module 301, configured to acquire a pre-activation signal input by a user when an automatic U-turn mode is activated, where the pre-activation signal includes a rotation direction signal, a rotation angle signal, a brake pedal signal, an accelerator pedal signal and a gear signal;
a second acquiring module 302, configured to acquire an auxiliary parameter of a vehicle according to the pre-activation signal, where the auxiliary parameter is configured to assist a motor controller to respond to a steering instruction;
a generating module 303, configured to obtain a target direction, a rotation angle, a feed-forward torque and a target wheel speed according to the rotating direction signal, the brake pedal signal, the accelerator pedal signal and the gear signal, where the feed-forward torque is configured to instruct the motor controller to start controlling the vehicle to perform a steering operation; and
a first sending module 304, configured to send the steering instruction to the motor controller, where the steering instruction includes the target direction, the rotation angle, the feed-forward torque, the target wheel speed, and the auxiliary parameter.

FIG. 12 is a schematic structural diagram of a fifth embodiment of a vehicle steering control apparatus according to an embodiment of the present application. As shown in FIG. 12, the vehicle steering control apparatus 300 further includes:
a first receiving module 305, configured to receive a response signal sent by the motor controller;
a third acquiring module 306, configured to acquire swing angle sensor information and lateral longitudinal acceleration information according to the response signal;
a calculation module 307, configured to calculate a wheel rotation angle according to the swing angle sensor information and the lateral longitudinal acceleration information;
a second sending module 308, configured to send the wheel rotation angle to the motor controller; and
a second receiving module 309, configured to receive an automatic U-turn turn-on signal input by the user;
a mode activation module 310, configured to activate an automatic U-turn mode according to the automatic U-turn turn-on signal.

The vehicle steering control apparatus provided in each of the above-mentioned embodiments is configured to execute the method on the vehicle controller side in any one of the above-mentioned method embodiments, and the implementation principles and technical effects thereof are similar, which will not be repeated herein.

Those ordinary skilled in the art may understand that all or part of the steps in the above-mentioned method may be completed by instructing relevant hardware (such as a processor) through a program, and the program may be stored in a computer-readable storage medium, such as a read-only memory, a magnetic disk, or an optical disk. Optionally, all or part of the steps of the above-mentioned embodiments may also be implemented by using one or more integrated circuits. Accordingly, each module/unit in the above-mentioned embodiments can be implemented in a form of hardware, such as through an integrated circuit to achieve the corresponding functions thereof, or in a form of software functional module, such as through a processor to execute programs/instructions stored in a memory so as to achieve the corresponding functions thereof. The present invention is not limited to any particular form of combination of hardware and software.

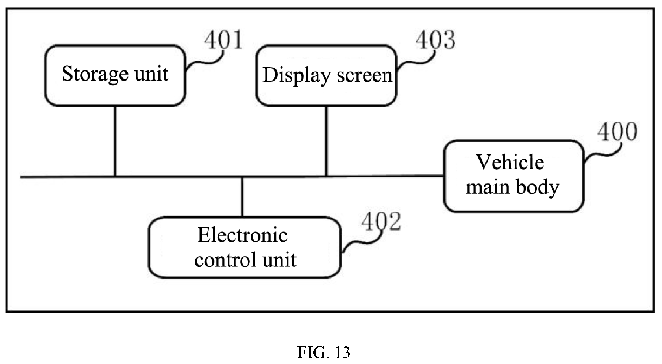

FIG. 13 is a schematic structural diagram of a vehicle according to an embodiment of the present application. As shown in FIG. 13, the vehicle includes: a vehicle main body 400, a storage unit 401, an electronic control unit 402, and a display screen 403; where
the storage unit 401 is configured to store computer execution instructions;
the electronic control unit 402 is configured to execute the computer execution instructions stored the memory to implement the method according to any one of the embodiments;
the display screen 403 is configured to display prompt information sent by the vehicle controller to the user.

The embodiments of the present application further provide a computer-readable storage medium, where the computer-readable storage medium stores computer execution instructions which, when being executed by a processor, is configured to implement the method according to any one of the embodiments.

Regarding the above-mentioned computer-readable storage medium, the above-mentioned readable storage medium may be implemented by any type of volatile or non-volatile storage device or a combination thereof, such as a static random access memory, an electrically erasable programmable read-only memory, an erasable programmable read-only memory, a programmable read-only memory, a read-only memory, a magnetic memory, a flash memory, a magnetic disk, or an optical disk. The readable storage medium may be any available media that can be accessed by a general-purpose or special-purpose computer.

Optionally, the readable storage medium is coupled to the processor, so that the processor can read information from the readable storage medium and write information into the readable storage medium. Of course, readable storage medium can also be a component of the processor. The processor and the readable storage medium may be located in application specific integrated circuits (Application Specific Integrated Circuits, ASIC). Of course, the processor and the readable storage medium may also be present in the device as separate components.

The embodiments of the present application further provide a computer program product, where the computer program product includes a computer program, and the computer program is stored in the computer-readable storage medium. At least one processor can read the computer program from the computer-readable storage medium, and when the at least one processor executes the computer program, the technical solution provided by any method embodiment can be implemented.

Those skilled in the art will easily come up with other embodiments of the present application after considering the specification and practicing the invention disclosed herein. The present application is intended to cover any variations, uses, or adaptive changes of the present application, and these variations, uses, or adaptive changes follow the generic principles of the present application and include common knowledge or customary technical means in the art not disclosed in the present application. The specification and embodiments are only considered exemplary, and the true scope and spirit of the present application are indicated by the appended claims.

It should be understood that the present application is not limited to the precise structure described above and shown in the accompanying drawings, and various modifications and changes may be made without departing from the scope thereof. The scope of the present application is limited only by the appended claims.

## Claims

1. A vehicle steering control method, which is applied to a motor controller, comprising:
receiving a steering instruction sent by a vehicle controller, wherein the steering instruction comprises a target direction, a rotation angle, a feed-forward torque, a target wheel speed and an auxiliary parameter, and the auxiliary parameter is configured to assist the motor controller to respond to the steering instruction;
responding to the feed-forward torque according to the target direction, the target wheel speed and the auxiliary parameter to obtain a response signal;
sending the response signal to the vehicle controller;
receiving a wheel rotation angle sent by the vehicle controller, wherein the wheel rotation angle is calculated by the vehicle controller according to the response signal; and
performing self-closed loop control according to the target direction, the target wheel speed, the wheel rotation angle, the rotation angle and the auxiliary parameter to control the vehicle to complete steering.

2. The method according to claim 1, wherein the performing the self-closed loop control according to the target direction, the target wheel speed, the wheel rotation angle, the rotation angle and the auxiliary parameter to control the vehicle to complete steering comprises:
calculating a motor speed and a target rotation angle according to the target wheel speed, the wheel rotation angle and the rotation angle;
calculating a target torque according to the target direction, the motor speed, the target rotation angle and the auxiliary parameter; and
controlling the vehicle to complete steering according to the target torque, the motor speed and the target rotation angle.

3. The method according to claim 2, wherein the method further comprises:
acquiring self-fault information and sending the self-fault information to the vehicle controller, wherein the self-fault information comprises overheating or overload;
receiving a termination instruction sent by the vehicle controller, wherein the termination instruction is configured to instruct the motor controller to terminate controlling the vehicle to perform a steering operation; and
controlling the vehicle to terminate steering according to the termination instruction.

4. A vehicle steering control method, which is applied to a vehicle controller, comprising:
acquiring a pre-activation signal input by a user when an automatic U-turn mode is activated, wherein the pre-activation signal comprises a rotation direction signal, a rotation angle signal, a brake pedal signal, an accelerator pedal signal and a gear signal;
acquiring an auxiliary parameter of a vehicle according to the pre-activation signal, wherein the auxiliary parameter is configured to assist a motor controller to respond to a steering instruction;
obtaining a target direction, a rotation angle, a feed-forward torque, and a target wheel speed according to the rotation direction signal, the brake pedal signal, the accelerator pedal signal, and the gear signal, wherein the feed-forward torque is configured to instruct the motor controller to start controlling the vehicle to perform a steering operation; and
sending the steering instruction to the motor controller, wherein the steering instruction comprises the target direction, the rotation angle, the feed-forward torque, the target wheel speed, and the auxiliary parameter.

5. The method according to claim 4, wherein the method further comprises:
receiving a response signal sent by the motor controller;
acquiring swing angle sensor information and lateral longitudinal acceleration information according to the response signal;
calculating a wheel rotation angle according to the swing angle sensor information and the lateral longitudinal acceleration information; and
sending the wheel rotation angle to the motor controller.

6. The method according to claim 5, wherein the method further comprises:
receiving self-fault information sent by the motor controller, wherein the self-fault information comprises overheating or overload; and
generating a termination instruction according to the self-fault information, and sending the self-fault information to the motor controller, wherein the termination instruction is configured to instruct the motor controller to terminate controlling the vehicle to perform the steering operation.

7. The method according to claim 6, wherein before the acquiring the pre-activation signal sent by the user, the method further comprises:
receiving an automatic U-turn turn-on signal input by the user; and
activating an automatic U-turn mode according to the automatic U-turn turn-on signal.

8. A vehicle steering control apparatus, comprising:
a first receiving module, configured to receive a steering instruction sent by a vehicle controller, wherein the steering instruction comprises a target direction, a rotation angle, a feed-forward torque, a target wheel speed and an auxiliary parameter, and the auxiliary parameter is configured to assist a motor controller to respond to the steering instruction;
a responding module, configured to respond to the feed-forward torque according to the target direction, the target wheel speed and the auxiliary parameter to obtain a response signal;
a sending module, configured to send the response signal to the vehicle controller;
a second receiving module, configured to receive a wheel rotation angle sent by the vehicle controller, wherein the wheel rotation angle is calculated by the vehicle controller according to the response signal; and
a first controlling module, configured to perform self-closed loop control to control the vehicle to complete steering according to the target direction, the target wheel speed, the wheel rotation angle, the rotation angle and the auxiliary parameter.

9. A vehicle steering control apparatus, comprising:
a first acquiring module, configured to acquire a pre-activation signal input by a user when an automatic U-turn mode is activated, wherein the pre-activation signal comprises a rotation direction signal, a rotation angle signal, a brake pedal signal, an accelerator pedal signal and a gear signal;
a second acquiring module, configured to acquire an auxiliary parameter of a vehicle according to the pre-activation signal, wherein the auxiliary parameter is configured to assist a motor controller to respond to a steering instruction;
a generating module, configured to obtain a target direction, a rotation angle, a feed-forward torque and a target wheel speed according to the rotating direction signal, the brake pedal signal, the accelerator pedal signal and the gear signal, wherein the feed-forward torque is configured to instruct the motor controller to start controlling the vehicle to perform a steering operation;
a first sending module, configured to send the steering instruction to the motor controller, wherein the steering instruction comprises the target direction, the rotation angle, the feed-forward torque, the target wheel speed, and the auxiliary parameter.

10. A vehicle, comprising: a vehicle main body, a storage unit provided in the vehicle main body, an electronic control unit, and a display screen; wherein
the storage unit is configured to store computer execution instructions; and
the electronic control unit is configured to execute the computer execution instructions stored in the storage unit, to implement the method according to any one of claims 1-7.

11. A computer-readable storage medium, wherein the computer-readable storage medium stores computer execution instructions which, when being executed by a processor, is configured to implement the vehicle steering control method according to any one of claims 1-7.
